# EUROPÄISCHE PATENTSCHRIFT

(11) **EP 2 253 453 B1**
(45) Veröffentlichungstag und Bekanntmachung des Hinweises auf die Patenterteilung: **24.06.2015**
(21) Anmeldenummer: 10004827.1
(22) Anmeldetag: 07.05.2010
(51) Int. Cl.: B29C 49/64, B29B 13/02, B29C 49/06, B29C 49/12, B29C 49/78, B29C 35/08, B29C 35/04, B29K 67/00

(54) **Verfahren zur Erwärmung von Vorformlingen vor deren Umformung zu Behältern**
Method for heating preforms before they are formed into containers
Procédé pour le réchauffement d'ébauches avant leur transformation en récipients

(30) Priorität: 19.05.2009 DE 102009025839
(43) Veröffentlichungstag der Anmeldung: 24.11.2010
(73) Patentinhaber: Krones AG, 93073 Neutraubling (DE)
(72) Erfinder: Forsthövel, Jochen, 93073 Neutraubling (DE); Lappe, Ulrich, 93073 Neutraubling (DE); Hirdina, Jochen, 93073 Neutraubling (DE); Knapp, Peter, 93073 Neutraubling (DE); Senn, Konrad, 93073 Neutraubling (DE); Hüttner, Gerald, 93073 Neutraubling (DE)
(74) Vertreter: Benninger, Johannes

(56) Entgegenhaltungen:
- EP-A1- 1 529 621
- WO-A1-2008/132603
- DE-A1- 4 107 011
- DE-A1-102005 061 334
- DE-A1-102007 016 028
- US-A- 4 046 498
- US-A- 4 147 487
- US-A- 5 920 677
- US-B1- 7 284 778

## Beschreibung

Die Erfindung betrifft ein Verfahren zum Erwärmen von Vorformlingen vor deren Umformung zu Behältern.

Dünnwandige Kunststoffbehälter aus thermoplastischem Kunststoffmaterial wie bspw. PET werden üblicherweise aus spritzgegossenen Vorformlingen, sog. Preforms hergestellt und in einem zweistufigen Streckblasverfahren zu Behältern umgeformt. Bei der Verarbeitung werden die Vorformlinge auf eine definierte Prozesstemperatur erwärmt, um den Umformvorgang beim Streckblasen zu ermöglichen. Dabei werden die Vorformlinge mittels Streckblasmaschinen zunächst in einer Heizstrecke beheizt, um die relativ dickwandigen Vorformlinge über ihren gesamten Querschnitt ausreichend zu erwärmen, so dass mit dem anschließenden Umformprozess mittels eines Streckblasverfahrens ein Hohlkörper geformt werden kann. Die Erwärmung in der Heizstrecke kann bspw. mittels infraroter Strahlung erfolgen. Eine solche Infrarotstrahlung hat den Vorteil, dass die Strahlung zum Teil in den Werkstoff (meist PET) eindringt, so dass auf diese Weise eine gute Durchwärmung des Vorformlings über seinen gesamten Querschnitt zu gewährleisten ist. Beim Durchlaufen der Heizstrecke können die Vorformlinge bspw. auf einem Heizdorn aufgesteckt sein, so dass sie beim Passieren der IR-Strahler zur Erzielung einer gleichmäßigen Beheizung über den Umfang in Rotation versetzt werden können.

Ein Vorformling besteht im Wesentlichen aus einen bereits auf Endmaß gefertigten Mundstücksbereich und einem noch zu verformenden Body-Bereich besteht. Die beiden Bereiche müssen beim Temperieren des Vorformlings voneinander weitestgehend thermisch getrennt gehalten werden, da bei einer zu starken Erwärmung des Mundstücks dessen Maßhaltigkeit beeinträchtigt werden bzw. das Mundstück deformiert werden kann. Andererseits muss speziell der Bereich direkt unter dem Mundstück stärker erwärmt werden, um einen prozesssicheren Blasvorgang sicherstellen zu können.

Bei bekannten Temperiervorrichtungen werden bestimmte Bereiche des Vorformlings stärker erwärmt, insbesondere der Halsbereich. So offenbart die WO 92/15442 A1 ein Verfahren und eine Vorrichtung zum Herstellen blasgeformter Hohlkörper aus Kunststoff wie PET. Hierbei wird ein gegossener, hohler Vorformling in erwärmtem Zustand in eine erwähnte Blasform eingesetzt und unter Streckung des Materials seiner Wandung in eine gewünschte Hohlkörperform gebracht, wobei die Wandung in Abhängigkeit von der gewünschten Hohlkörperform bereichsweise unterschiedlichen Streckungsgraden unterworfen wird. Zusätzlich werden Bereiche der Wandung, insbesondere ein Halsbereich, vor dem Blasformen zusätzlich erwärmt. Bei diesem Verfahren sollen Übergangsbereiche der Wandung des Vorformlings zwischen Wandungsbereichen mit unterschiedlichen Streckungsgraden zusätzlich erwärmt.

Die DE 20 2008 005 252 U1 beschreibt eine Lampenvorrichtung sowie eine Heizstrecke für die Erwärmung von einen Tragring aufweisenden Vorformlingen für die Herstellung von Behältnissen wie Flaschen. Die Lampenvorrichtung bildet eine Strahlungsquelle und umfasst einen Reflektor für die Reflexion von der Strahlungsquelle emittierter Strahlung. Der Reflektor erstreckt sich in Umfangsrichtung einer durch die Strahlungsquelle verlaufenden Achse über einen Winkel, der größer als 200 Grad ist. Hierdurch soll eine gerichtete Strahlung erzeugt werden, die den Vorformling in bevorzugten Bereichen temperiert.

Die US 4 046 498 A zeigt eine Blasmaschine für Flaschen. Im Rahmen des dort offenbarten Verfahrens werden Rohlinge in einer Heizeinrichtung vorerwärmt und anschließend einer weiteren Heizeinrichtung zugeführt. Die Temperatur in der weiteren Heizeinrichtung ist höher als die Temperatur in der ersten Heizeinrichtung.

Die EP 1 529 621 A1 offenbart ein Verfahren gemäß dem Oberbegriff des Anspruchs 1 und eine Vorrichtung zum Erwärmen von Vorformlingen. Ein Vorformling wird in Aufnahmeöffnungen geführt und über bügelartige Elemente gehalten. Die bügelartigen Elemente sind mit Heizeinrichtungen gekoppelt.

Aus der DE 696 23 606 T2 ist weiterhin ein Verfahren und eine Vorrichtung zum selektiven Heizen einer Vorform eines Behälters wie einer Flasche aus einem thermoplastischen Material bekannt. Die Beheizung erfolgt mittels Lampen, die eine gerichtete Strahlung erzeugen. Nach dem Heizvorgang wird der heiße Vorformling einem Blas- oder Blasziehformvorgang unterzogen. Die Strahlung der Lampen wird mit Hilfe von optischen Fokussiermitteln in gewünschter Weise derart fokussiert auf den Vorformling abgegeben, dass dieser im Wesentlichen nur in den zu verformenden Bereichen erwärmt wird.

Die Infrarotstrahlung wird von dem Preformmaterial nur zu einem bestimmten Grad absorbiert. Dieser Absorptionsgrad hängt von der Wanddicke des Vorformlings, von dem für den Vorformling verwendeten Preformmaterial, von zugegebenen Additiven und ggf. von weiteren Faktoren ab. Es gibt jedoch immer noch Strahlung, welche die Wände des rotationssymmetrischen Vorformlings durchdringt und dann auf der jeweils gegenüber liegenden Seite wieder eindringt. Diese Strahlungsverteilung kann vorteilhaft genutzt werden, da auf diese Weise der Energieeintrag in den Vorformling gesteigert werden kann. Jedoch werden bei dieser Strahlungsverteilung auch Strahlungsanteile mit einem nach oben zum Mundstück gerichteten Abstrahlwinkel direkt auf das Mundstück oder den Tragring umgelenkt und wärmen diese Bereiche auf.

Zur gezielten Strahlungsverteilung und insbesondere zur Abschirmung des Gewindebereichs eines zu erwärmenden Vorformlings schlägt die JP 2008 000 972 A vor, in den Innenbereich eines von außen mittels Infrarotstrahlungsquellen zu erwärmenden Vorformlings einen dessen Wandungen durchdringenden Strahlungsanteil zumindest teilweise reflektierenden Stab aus titanhaltigem Metall einzuführen.

Beim bekannten Stand der Technik kommt es dennoch in einigen Fällen zur Überhitzung des Tragrings, so dass er beim Blasvorgang durch die über die Blasdüse übertragene Kraft deformiert wird.

Das vorrangige Ziel der vorliegenden Erfindung besteht deshalb in der verbesserten, gezielten und weitgehend beeinflussbaren Temperierung des Vorformlings, so dass dessen Gewindebereich und dessen Tragring nicht oder nur schwach und dessen Halsbereich in möglichst definierter Weise erwärmt werden kann, um den der Erwärmung folgenden Blas- und/oder Streckblasumformprozess in möglicht exakt definierbarer Weise durchführen zu können.

Dieses Ziel der Erfindung wird mit einem Verfahren zur weitgehend gleichmäßigen und/oder bereichsselektiven Erwärmung eines Vorformlings aus thermoplastischem Kunststoff vor dessen Blasumformung zu einem Behälter, ggf. unter gleichzeitiger Kühlung eines Gewindebereichs des Vorformlings, durch die Merkmale des Anspruchs 1 erreicht. Auf diese Weise kann erreicht werden, dass das Kunststoffmaterial des Vorformlings ungleichmäßig erwärmt wird, so dass die allmähliche Durchtemperierung des Kunststoffes beim Durchlaufen der Heizstrecke im Halsbereich verzögert abläuft, womit auch die Erwärmung des Gewindebereichs und des Kragenrings stark abgeschwächt bzw. weitgehend verhindert werden kann. Während normalerweise bei der Beheizung dieses rotierenden Körpers Probleme durch eine zu starke Erwärmung des Halsbereichs sowie durch Streustrahlung auf das Mundstück entstehen können, ermöglicht das erfindungsgemäße Verfahren, das Mundstück soweit von der Wärmeeinwirkung beim Temperieren abzuschirmen, dass es weitgehend kalt bleibt. Wahlweise kann vorgesehen sein, dass die Erwärmung des nahe am Gewindebereich befindlichen Halsabschnitts des Vorformlings verzögert und/oder allgemein veränderlich und/oder in ihrer Intensität temporär erhöht abläuft, um auf diese Weise die gewünschte ungleichmäßige Erwärmung des Vorformlings zu erreichen. Zusätzlich oder alternativ kann auch vorgesehen sein, dass die Erwärmung des Vorformlings bzw. dessen Halsabschnitts mit variierter Lage des Strahlungs-Wellenlängenmaximums durchgeführt wird.

Da aus maschinentechnischen Gründen eine Abschirmung des Mundstücks relativ aufwändig und damit auch teuer wäre, und da zudem eine dickere Abschirmung zu viel Material unter dem Mundstück mit abschirmen würde, welches nicht mehr verstreckt werden kann und somit nicht mehr für den Behälterkörper zur Verfügung steht, andererseits jedoch mit dem Trend zu immer leichteren Mundstücken und Tragringen die Mundstücksüberhitzung zunehmend problematischer wird, wird mit der erfindungsgemäßen variablen Erwärmung des Vorformlings eine Möglichkeit der Umformung von dünnwandigen Behältern zur Verfügung gestellt, welche ohne eine solche Abschirmung zu den gewünschten Ergebnissen führt.

Bei den zunehmend häufiger eingesetzten leichten und damit sehr dünnwandigen Behältern werden auch die Wanddickenunterschiede bei den Vorformlingen immer geringer. Damit kann oftmals ein sauberer "Halsabzug" nicht mehr allein durch das Preformdesign sichergestellt werden, sondern muss immer häufiger durch starkes Erwärmen der Preformbereiche unterhalb des Tragrings unterstützt werden. Damit ist jedoch eine zusätzliche Aufheizung des Mundstücks aufgrund einer intensivierten Wärmeübertragung und/oder durch einen erhöhten Anteil von Streustrahlung verbunden. Der Außendurchmesser des Vorformlings im Bereich unterhalb des Tragrings wird bestimmt von der Kavitätenseite des Spritzgießwerkzeugs. Eine Änderung des Werkzeugs in diesem Bereich wäre sehr teuer und würde Folgekosten nach sich ziehen, z.B. bei den Blasformen durch notwendige Änderungen der sog. Neckzentrierplatte, aber auch bei den Rüstteilen bestehender Abfüll-Linien mit Neck-Handling. Aus diesem Grund ist es oftmals auch dann nicht sinnvoll, den Außendurchmesser des Vorformlings in diesem Bereich zu ändern, selbst wenn das Design eines Vorformlings hinsichtlich einer Gewichtsoptimierung modifiziert werden soll. Andererseits ist der Innendurchmesser der Vorformlinge im Bereich direkt unterhalb des Tragrings kaum veränderbar, da er im wesentlichen bestimmt wird durch den Innendurchmesser des Mundstücks, der wiederum von den am Markt erhältlichen Verschlusssystemen abhängt und deshalb nicht vergrößert werden kann. Aus diesem Grund ist es in der Praxis nicht sinnvoll, die Wanddicke der Preform direkt unter dem Tragring zu verändern. Im Ergebnis bleibt diese Wanddicke auch bei einem gewichtsoptimierten und in seiner übrigen Wandstärke reduzierten Vorformling erhalten. Im Gegensatz dazu wird die Wanddicke des übrigen Preformkörpers verringert, und zwar in der Regel durch Austausch der Kern-Seite des SpritzgießWerkzeuges, so dass dieses einen größeren Kerndurchmesser aufweist.

Im Ergebnis entstehen eine geringe Wanddicke im Preformkörper und eine weitgehend konstante Wanddicke direkt unterm Tragring, woraus gerade bei Vorformlingen mit einem Mundstück, welches größer ist als der Preformkörper, folgendes Problem entstehen kann. Durch den größeren Durchmesser direkt unterhalb des Tragrings und immer ähnlicher werdende Wanddicken wird im Bereich unterhalb des Tragrings eine größere Querschnittsfläche generiert als im Übrigen Preformkörper. Der Material-"Abriss"" beim Streckblasen beginnt nun aber an der Stelle, an der das Material aufgrund der reduzierten Wandstärken relativ schwach und gleichzeitig die auf das Material einwirkende Spannung relativ groß ist. Wünschenswert ist - insbesondere bei sehr dünnwandigen, gewichtsoptimierten Vorformlingen - ein Abriss direkt unter dem Tragring, um das Material der Preform optimal auszunutzen. Da die Querschnitte dem aber entgegenwirken (großer Querschnitt und kleine Spannung unter dem Tragring), muss dieser Problematik, um den gewünschten Effekt zu erreichen, mit einer gezielten Schwächung des Materials entgegengewirkt werden. Eine solche Nachgiebigkeit oder "Schwächung" des zu verstreckenden Kunststoffmaterials kann in diesem Fall nur über eine erhöhte Temperatur im Halsbereich unterhalb des Tragrings erreicht werden, die höher liegen muss als im Bereich des Preformkörpers.

Um diesen gewünschten Temperaturgradienten zu erreichen, ohne das Mundstück zu überhitzen, ist gemäß der vorliegenden Erfindung vorgesehen, durch eine gerichtete Aufheizung parallel zum Tragring direkt unterhalb vom Tragring eine definierte Zone ohne Streustrahlung so zu beheizen, dass hier - unabhängig von der Preformgeometrie - ein heißer Ring oder sog. Gürtel entsteht, an dem ein sauberer Halsabzug definiert eingestellt und sichergestellt werden kann. Um die Wärmeleitung vom Preformkörper in den Mundstückbereich zu minimieren, muss die Aufheizung dieses Bereichs zunächst verzögert und schließlich am Ende des Aufheizprozesses erfolgen, und zwar in einem möglichst kurzen Zeitraum. Dadurch, dass der Halsabzug auf die beschriebene Weise sichergestellt werden kann, kann der Preformkörper unabhängig davon beheizt werden, und zwar so, dass dort wesentlich niedrigere Temperaturen gefahren werden können. Die Lampen zum Aufheizen des restlichen Preformkörpers können in Richtung Preformrotationsachse weiter vom Mundstück weg rücken, die Streustrahlung in Richtung Mundstück verliert damit in dritter Potenz je Strecke an Intensität. Gleichzeitig kann ein Material-Halsabzug direkt unter dem Tragring erzielt werden, der eine optimale Materialausnutzung sicherstellt, ohne das Mundstück hierdurch thermisch zu gefährden. Neben dem Effekt eines kälteren Mundstücks wird ein deutlich geringerer Energiebedarf zum Aufheizen des gesamten Vorformlings für solche Fälle erreicht. Die Beheizung des Bereichs unterhalb des Tragrings in definierter gürtelartiger Form kann bspw. erfolgen mittels Laserstrahlung, mittels einer offenen Flamme, z.B. einer Gasflamme, ggf. angewendet von außen und von innen, mittels Dioden , die im IR Frequenzbereich strahlen, mittels einer gerichteten Mikrowellenstrahlung und/oder mittels einer parallelisierten Infrarotstrahlung.

Das erfindungsgemäße Verfahren dient zur weitgehend gleichmäßigen und/oder bereichsselektiven Erwärmung eines Vorformlings aus thermoplastischem Kunststoff vor dessen Blasumformung zu einem Behälter unter gleichzeitiger Kühlung eines Gewindebereichs, an dem der Vorformling während seiner Erwärmung gehalten wird. Kennzeichnend für das Verfahren ist die gegenüber anderen Bereichen temporär verzögerte und/oder veränderliche und/oder in ihrer Intensität temporär erhöhte Erwärmung eines nahe am Gewindebereich befindlichen Halsabschnitts des Vorformlings. Der Vorformling wird in einer ersten Phase seiner Erwärmung in seinem Halsbereich mit gegenüber den übrigen Bereichen geringerer Intensität erwärmt wird, so dass die Wärmeübertragung in den zu kühlenden Gewindebereich deutlich abgeschwächt ist. Weiterhin ist es sinnvoll, den Vorformling in einer zweiten Phase seiner Erwärmung in seinem Halsbereich mit gegenüber den übrigen Bereichen erhöhter Intensität zu erwärmen, damit der Halsabzug störungsfrei in der beschriebenen Weise erfolgen kann, ohne dass während des Streckblasumformvorgangs der Bereich des Vorformlings mit dem Stützring sowie dem sich daran anschließenden Gewindebereich in irgendeiner Weise beeinträchtigt wird. Vorzugsweise ist die zweite Phase gegenüber der ersten Phase verkürzt. Zudem sollte sich an die zweite Phase der Erwärmung unmittelbar der Prozess der Blasumformung des Vorformlings zum Behälter anschließen, damit die Prozesse in exakter Weise gesteuert und die Wärmeentwicklung im Material sowie der Wärmeeintrag in den Vorformling in konstanter und reproduzierbarer Weise zur Sicherstellung einer gleichbleibend hohen Fertigungsqualität erfolgen kann.

Die Erwärmung kann auf unterschiedlichste Weise erfolgen, bspw. mittels infraroter Bestrahlung, mittels Laserstrahlen, mittels Mikrowellenbestrahlung und/oder mittels wenigstens einer offenen Verbrennungsflamme. Es können über die Heizstrecke mehrere Wärmequellen verteilt angeordnet sein, die für eine möglichst gleichmäßige Temperierung des Vorformlings zu sorgen haben. Zudem kann vorgesehen sein, dass die infrarote und/oder mittels Laserstrahleinrichtungen erzeugte Bestrahlung temporär durch Variation der Wellenlänge ihres Strahlungsmaximums veränderlich ist. So kann es von Vorteil sein, dass die infrarote Bestrahlung in der zweiten Phase der Bestrahlung eine Wellenlänge mit einem Strahlungsmaximum größer als 1250 nm aufweist. Eine Bestrahlung in einem derartigen langwelligen Infrarotbereich kann für die Halsbereiche besonders günstig sein, da die Eindringtiefe dieser Strahlungsart relativ gering ist, was gut mit den geringen Wanddicken in diesen Bereichen des Vorformlings korrespondiert. Auf diese Weise kann effektiv verhindert werden, dass zu viele Strahlungsanteile die bestrahlten Wandungen durchdringen und an der Innenseite des Vorformlings an den gegenüber liegenden Wänden zu einer weiteren Erwärmung führen. Diese zusätzliche Erwärmung kann im Interesse einer möglichst präzisen Steuerung des Wärmeeintrags unerwünscht sein.

Wahlweise kann jedoch auch vorgesehen sein, dass zumindest der Halsbereich des Vorformlings an seiner Außenseite sowie an seiner Innenseite erwärmt und/oder bestrahlt wird, ggf. durch gezielte Durchdringung der Wandungen und Bestrahlung der gegenüber liegenden Wandbereiche von ihrer Innenseite her. In diesem Zusammenhang kann es auch vorteilhaft sein, mit zusätzlichen Hilfseinrichtungen zur Strahlungsverteilung zu arbeiten, bspw. mit geeignet geformten Reflektoreinrichtungen. So kann die Erwärmung und/oder Bestrahlung der Innenseite des Vorformlings mit in seinem Halsbereich angeordneten Reflektoreinrichtungen beeinflusst, gerichtet und/oder verteilt werden. Auf diese Weise wird erreicht, dass die Reflektoreinrichtung die zur Erwärmung eingesetzte Infrarot- und/oder Mikrowellenbestrahlung nach dem Durchdringen des für die Strahlung zumindest teiltransparenten Halsbereichs des Vorformlings die auf eine Reflektorfläche auftreffende Strahlung durch Reflexion verteilt und/oder auf oberhalb und/oder unterhalb der durchdrungenen Bereiche umlenkt.

Eine für den gewünschten Zweck vorteilhaft verwendbare Variante einer solchen Reflektoreinrichtung kann bspw. durch einen parabolähnlichen Spiegel gebildet sein. Grundlage hierfür ist der physikalisch bekannte Effekt des Hohlspiegels (Parabolspiegel). Dieser Hohlspiegel sollte so ausgerichtet sein, dass der Brennpunkt in den kritischen Abzugsbereich des Preforms unterhalb des Tragrings gelegt wird. Ankommende Strahlung wird mit dem Spiegel auf den Brennpunkt zurückgeworfen und erwärmt gezielt die Problemzonen von innen. Diese Variante weist u. a. zwei wesentliche Vorteile auf, da die ungewollte Mundstücksaufheizung um den reflektierten Teil der Strahlung reduziert wird. Zudem gehen die reflektierten Strahlungsanteile nicht verloren, sondern können zur Temperierung des Vorformlings in optimaler Weise genutzt werden.

Im Zusammenhang mit einer derartigen Reflektoreinrichtung kann es von Vorteil sein, die Reflektoreinrichtungen so anzuordnen, dass sie bspw. fest an einer Halteeinrichtung angeordnet sind und zusammen mit dem zu erwärmenden Vorformling die Heizstrecke durchlaufen, was durch einen geeigneten Halter erreicht werden kann, der bspw. an einem Greifer für den Vorformling angebracht ist. Eine solche Koppelung ist jedoch keinesfalls zwingend erforderlich; die Strahlungsquellen können wahlweise auch fest in der Wärmekammer bzw. in der Heizstrecke installiert sein.

Das oben genannte Ziel der Erfindung kann weiterhin mit einer Temperiervorrichtung zur weitgehend gleichmäßigen und/oder bereichsselektiven Erwärmung eines Vorformlings aus thermoplastischem Kunststoff vor dessen Blasumformung zu einem Behälter erreicht werden. Die Temperiervorrichtung umfasst wenigstens eine auf den Vorformling einwirkende Strahlungs- und/oder Wärmequelle sowie ggf. eine optionale Kühleinrichtung für einen Gewindebereich, an dem der Vorformling während seiner Erwärmung gehalten ist. Die erfindungsgemäße Temperiervorrichtung ist **dadurch gekennzeichnet, dass** die wenigstens eine auf den Vorformling einwirkende Strahlungs- und/oder Wärmequelle mehrere Einwirkungsbereiche am Vorformling mit jeweils unterschiedlichen Erwärmungsintensitäten definiert.

Bei der Temperiervorrichtung ist zudem vorgesehen, dass die zu temperierenden Vorformlinge wenigstens eine im Gewinde- und/oder Halsbereich angeordnete Reflektoreinrichtung zur Umlenkung von den Halsbereich durchdringenden Strahlungsanteilen und zur Erwärmung des Halsbereichs an einer Innenseite des Vorformlings aufweisen. Mit einer solchen Reflektoreinrichtung kann eine besonders präzise Temperierung des Halsbereichs gesteuert und beeinflusst werden. Zudem können Strahlungsanteile, welche den transparenten Halsbereich durchdringen und auf den Tragring oder den darüber angeordneten Gewindebereich gerichtet sind, reflektiert und in vorteilhafter Weise zur Erwärmung der Innenwandung des Halsbereichs genutzt werden.

Wahlweise kann diese Reflektorfläche bzw. können die Reflektorflächen hinsichtlich ihrer Position und/oder Oberfläche verstellbar ausgebildet sein, so dass bspw. im Verlauf des Transports des Vorformlings durch die Heizstrecke eine Variation der Bestrahlung unterschiedlicher Abschnitte des Vorformlings bzw. dessen Halsbereichs ermöglicht ist. So können bspw. verstellbare Reflektorflächen vorgesehen sein, die als verschiebbarer Reflektor, als Reflektor mit einer Vielzahl von separat ansteuerbaren Mikroarrays, als flexibler Spiegel etc. ausgebildet sein können. Alternativ oder zusätzlich hierzu kann eine verschiebbare Abschirmung im Halsbereich vorgesehen sein, die innen im Vorformling entlang seiner Längsachse verschiebbar ausgebildet sein kann. Diese verschiebbare Abschirmung kann ggf. auch als verschiebbarer Reflektorzylinder ausgebildet sein, dessen Mantelfläche eine reflektierende Oberfläche und/oder eine geeignete Strukturierung zur Umlenkung auftreffender Strahlung in eine gewünschte Richtung aufweisen kann.

Bei der Temperiervorrichtung können insbesondere mehrere Strahler mit jeweils unterschiedlichen Abstrahlintensitäten zum Einsatz kommen. Wahlweise können auch einzelne oder alle dieser mehreren Strahler mit jeweils veränderlich einstellbaren Abstrahlintensitäten betrieben werden. Diese Strahler können als Linsenstrahler und/oder als sog. Parabelstrahler ausgebildet sein. So können bei einer derartigen Ausgestaltung bspw. ein oder mehrere Linsenstrahler vorgesehen sein, der/die als Strahlungsquelle in der Heizstrecke zur Temperierung der Vorformlinge vor dem Blasformen angeordnet ist/sind. Der Linsenstrahler ist Teil der Heizeinrichtung, die im Verlauf der Heizstrecke eine Mehrzahl derartiger Strahler zur Erzeugung einer infraroten Wärmestrahlung aufweist. Wahlweise können mehrere herkömmliche Röhrenstrahler sowie einige derartiger Linsenstrahler kombiniert werden. Ein solcher Linsenstrahler kann bspw. eine zylindrisch geformte Glasröhre mit einer koaxial angeordneten Glühwendel aufweisen, die infrarotes Licht gleichmäßig radial in alle Richtungen abstrahlt. Ein größerer Teil einer Innenmantelfläche der Glasröhre ist dabei vorzugsweise mit einer reflektierenden Beschichtung versehen, die für eine Reflexion der Lichtanteile an eine Austrittsfläche sorgt. Ein definierter Bereich der Glasröhre, der die Austrittsfläche bilden soll, ist bei dieser Variante als Linse ausgebildet, die für eine Bündelung des austretenden Lichts und für dessen Parallelisierung sorgt. Die reflektierende Beschichtung kann im Querschnitt ein Winkelsegment von bspw. ca. 180 Grad oder mehr überdecken, während die Austrittsfläche mit der darin ausgebildeten Linse ein Winkelsegment von bspw. etwas mehr als 90 Grad, vorzugsweise jedoch ca. 180 Grad oder etwas weniger als 180 Grad, überdecken kann. Das von der Glühwendel des Linsenstrahlers abgestrahlte infrarote Licht wird von der Beschichtung vorzugsweise diffus reflektiert und an der Linse so gebrochen, dass es außerhalb der Röhre annähernd parallel abgestrahlt wird. Der von solchen Strahlern definierte und abgedeckte Heizbereich kann somit sehr exakt eingegrenzt werden, wodurch der Heizbereich bei Bedarf sehr schmal und sehr präzise auf den zu erwärmenden Abschnitt der Vorformlinge ausgerichtet werden kann. Der Heizbereich kann somit etwas schmaler als der Durchmesser der Glasröhre gewählt werden. Die in der Glasröhre ausgebildete Linse kann vorzugsweise bei der Fertigung der Glasröhre durch eine geeignete Verdickung im Glas realisiert werden. Eine in entsprechender Weise geschliffene Linse ist nicht notwendig. Mit der Formgebung der Glasröhre kann die Wirkrichtung der infraroten Strahlung gezielt auf die Stellen und Bereiche der Vorformlinge gerichtet und gelenkt werden, an denen sie für die gewünschte Temperierung im benötigten Umfang sorgen können. Anstelle der Verwendung von Leitblechen oder Reflektoren schlägt die Erfindung gemäß dem gezeigten Ausführungsbeispiel vor, optische Reflexions- und Brechungseinrichtungen durch eine in beschriebener Weise modifizierte Röhre vorzusehen.

Wahlweise sind auch alternative Ausführungsformen der Heizquellen der Heizeinrichtung möglich, bspw. in Form eines sog. Parabelstrahlers. Einer oder mehrere solcher Parabelstrahler können wahlweise mit herkömmlichen Infrarotstrahlern und/oder mit Linsenstrahlern gemäß der zuvor beschriebenen Ausführungsvariante kombiniert werden, um als Strahlungsquellen in der Heizstrecke zur Temperierung der Vorformlinge vor dem Blasformen zu dienen. Ein solcher Parabelstrahler weist eine Glasröhre mit ovalem oder ellipsenförmigem Querschnitt auf. In einem Brennpunkt der Ellipsenform ist die Glühwendel angeordnet, die gleichmäßig in radialer Richtung infrarotes Licht abstrahlt. Eine reflektierende Beschichtung kann an der Innenmantelfläche der Glasröhre derart angeordnet sein, dass der Bereich um die Glühwendel sowie etwas mehr als die Hälfte des Querschnittes der Glasröhre durch die Beschichtung abgedeckt ist. Das in Richtung der Beschichtung abgestrahlte Licht wird auf diese Weise parallel nach vorne in Richtung einer nicht beschichteten Austrittsfläche abgestrahlt und tritt als weitgehend parallel gerichtetes infrarotes Licht aus der Glasröhre des Parabelstrahlers aus. Der nicht beschichtete Austrittsbereich der Glasröhre weist keine verdickte Wand auf und wirkt somit nicht als Linse, wie dies bei der zuvor beschriebenen Variante der Fall ist. Eine solche Linsenwirkung ist bei der Variante des Parabelstrahlers nicht notwendig, da die Ellipsenform des Röhrenquerschnitts in Verbindung mit der rückseitigen, im Bereich um die Glühwendel angeordneten reflektierenden Beschichtung für die gewünschte Parallelisierung des austretenden Infrarotlichts sorgt.

Besonders vorteilhaft kann es zudem sein, wenn die Temperiervorrichtung mehrere Strahler mit veränderlicher Strahlungscharakteristik mit veränderlichen Strahlungsmaxima der emittierten Wellenlängenbereichen umfasst.

Die für die Temperiervorrichtung einsetzbaren Lampen sind in der Lage, ein relativ breites Wellenlängenspektrum im infraroten Bereich abzustrahlen. Durch Ändern der Strahlertemperatur kann die Lage des Strahlungs-Intensitäts-Maximums einer solchen Lampe verschoben werden. Eine relativ nidrige Strahlertemperatur mit einem langwelligen Strahlenspektrum lässt sich mit geringem Energieeinsatz erzeugen. Allerdings zeigt diese Strahlung eine relativ geringere Eindringtiefe, so dass sie oftmals nicht ausreichend von der Oberfläche des erwärmten Preforms in dessen tiefere Materialschichten dringen kann. Die dabei erreichte Eindringtiefe ist für dickwandige Preforms unter Umständen nicht ausreichend, so dass eine ausreichende Durchwärmung des Materials nicht sichergestellt werden kann. Dünnwandigere Preforms dagegen kann man mit einer derartigen langwelligen Strahlung sehr effizient aufheizen. Ein weiterer Nachteil der langweiligen Strahlung sind die damit erzielbaren geringeren Leistungsdichten, da das Strahlungsmaximum niedriger ist.

Hohe Strahlertemperaturen dagegen haben den Vorteil, dass die Strahlung sehr tief in das zu erwärmende Kunststoffmaterial eindringt. Im Gegenzug entstehend dafür jedoch relativ hohe Energiekosten und eine verkürzte Lebensdauer für die verwendeten Lampen. Auch besteht die Gefahr, dass bei dünnwandigen Vorformlingen aufgrund der großen Eindringtiefe eine zu geringe Strahlungsabsorption im Material erfolgt, so dass in der Folge die Effizienz des Energieeintrags schlechter wird.

Um die genannten Vorteile zu kombinieren und die Nachteile weitestgehend auszuschließen, können im Verlauf der Heizstrecke und damit entlang der Wegstrecke des Preforms durch den Ofen zwei oder mehr unterschiedliche Lampentypen verbaut werden, wobei diese Lampentypen sich dadurch unterscheiden sollten, dass sie ihr Strahlungsmaximum an verschiedenen Stellen im Spektrum haben. Diese Lampen können dann je nach der Gestaltung und Wandstärke der zu beheizenden Vorformlingen zu unterschiedlichen Anteilen verwendet werden. Bei dünnwandigen Preforms können mehr die Lampen mit langwelligen Strahlungsspektren eingesetzt werden, während bei dickwandigen Preforms verstärkt die Lampen mit kurzwelligen Strahlungsspektren zum Einsatz kommen.

Da zur Herstellung kleinerer Flaschen oft relativ dünnwandige Preforms verwendet werden, wäre auch eine Variante denkbar, in der die "oberste(n)" Lampe(n) in einem Heizkasten (hängendes Heizen, also die Lampe, die das Material unterm Tragring heizt) über die ganze oder überwiegende Ofenlänge mit langwelligen Strahlern bestückt werden, da diese Preforms kürzer sind und somit nur diese Lampen für das Aufheizen der Preforms wirksam sind. Gerade der besonders dünne Bereich unterhalb des Tragrings, also vor dem Übergang in die zylindrische Wanddicke, ist hierfür prädestiniert. Die geringere Strahlungsintensität der langwelligen Strahler könnte z.B. durch beidseitiges Beheizen abgemildert werden, bei dem die Lampen gegenüber liegend angeordnet sein können.

Eine weitere Möglichkeit zur Variation der Strahlung ist der Einsatz von Lampen mit zwei oder mehr verschiedenen Reflektortypen, bspw. solchen mit unterschiedlichen Materialschichten. Dabei können die Schichten vom Reflektor eines ersten Typs folgendermaßen aufgebaut sein. Der Reflektionskörper ist aus wenigstens zwei Komponenten aufgebaut, wobei eine erste Komponente eine erste Oberfläche aufweist, die für die von der Energiequelle abgegebene Strahlung wenigstens teilweise transparent ist. Diese Oberfläche kann bspw. aus Glas, insbesondere aus Quarzglas bestehen und kann bevorzugt als mindestens eine Scheibe, Pressglas oder mehrere Glassegmente ausgebildet sein. Eine zweite Komponente kann dagegen eine Schicht aufweisen, deren Material aus einer Gruppe von Materialien ausgewählt ist, welche Aluminium, Chrom, Nickel, Kupfer, Gold und/oder mindestens eine Legierungen aus mindestens einem dieser Metalle enthält und zumindest abschnittsweise an der ersten Komponente anliegt. Die zweite Komponente kann zudem eine zweite, vorzugsweise strukturierte Oberfläche aufweisen. Zudem ist es sinnvoll, wenn wenigstens ein Abschnitt der zweiten Komponente für die Strahlung reflektierend und undurchlässig gegenüber langwelligen Strahlen ist. So kann als Reflektor zweiten Typs bspw. eine reflektierende Keramik eingesetzt werden.

Beide Reflektoren können prismen- oder parabelförmig profiliert sein und sowohl hinter der IR-Lampe liegen als auch auf der gegenüberliegenden Seite hinter dem Preform.

Die zu erwärmenden Vorformlinge passieren die Strahler entlang einer Transportstrecke, bevor sie in eine Blasstation überführt werden.

Weitere Merkmale, Ziele und Vorteile der vorliegenden Erfindung gehen aus der folgenden detaillierten Beschreibung einer bevorzugten Ausführungsform der Erfindung hervor, die als nicht einschränkendes Beispiel dient und auf die beigefügten Zeichnungen Bezug nimmt. Gleiche Bauteile weisen dabei grundsätzlich gleiche Bezugszeichen auf und werden teilweise nicht mehrfach erläutert.
Fig. 1 zeigt eine schematische Darstellung der Verarbeitung von Vorformlingen aus thermoplastischem Kunststoff zu streckblasgeformten Behältern.
Fig. 2 zeigt anhand eines Diagramms den typischen Zeitverlauf des Energieeintrags in einen Halsbereich eines Vorformlings.
Fig. 3 zeigt ein Diagramm mit einem über einen Wellenlängenverlauf aufgetragenen Transmissonsgrad von PET sowie einem Strahlspektrum für eine Temperatur von 2500 K.
Fig. 4 zeigt eine schematische Darstellung eines Linsenstrahlers, der als Strahlungsquelle in der Heizstrecke zur Temperierung der Vorformlinge vor dem Blasformen angeordnet ist.
Fig. 5 zeigt eine schematische Darstellung eines Parabelstrahlers, der als Strahlungsquelle in der Heizstrecke zur Temperierung der Vorformlinge vor dem Blasformen angeordnet ist.
Fig. 6 zeigt eine Längsschnittdarstellung einer im Halsbereich eines Vorformlings angeordneten Reflektoreinrichtung.

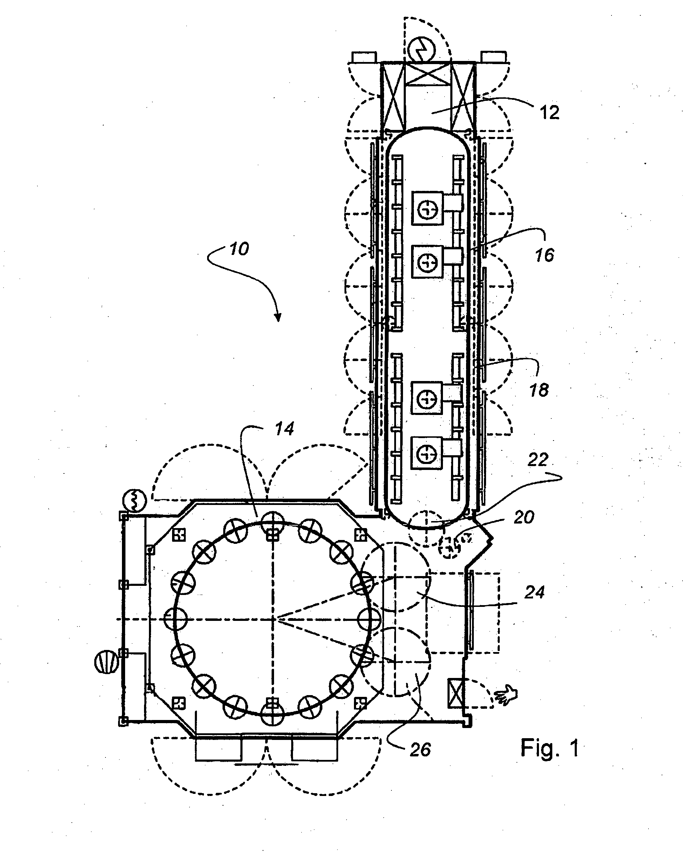

Die schematische Darstellung der Fig. 1 zeigt in schematischer Weise eine typische Abfolge von Stationen bei der Verarbeitung von Vorformlingen aus thermoplastischem Kunststoff zu streckblasgeformten Behältern. So ist in Fig. 1 eine Vorrichtung 10 gezeigt, mit der Behälter oder Kunststoffflaschen im Wesentlichen durch ein Streckblasverfahren hergestellt werden können. Die Vorrichtung 1 umfasst eine Heizstrecke 12, in der die Vorformlinge (nicht dargestellt) für die herzustellenden Behälter bzw. Kunststoffflaschen (ebenfalls nicht dargestellt) auf eine für das Streckblasverfahren notwendige Umformtemperatur gebracht werden. An die Heizstrecke 12 schließt sich eine Blasmaschine 14 an. Innerhalb der Heizstrecke 12 ist eine Fördereinrichtung 16 vorgesehen, die eine Vielzahl von Vorformlingen an Wärmequellen bzw. an einer Heizeinrichtung 18 der Heizstrecke 12 vorbeiführt. An einer Übergabeposition 20 werden die Vorformlinge in die Heizstrecke 12 eingeleitet. An einer Ausgabeposition 22 werden die in gewünschter Weise temperierten Vorformlinge an eine Eingabeposition 24 für die Blasmaschine 14 übergeben. An einer Ausgabeposition 26 der Blasmaschine 14 werden die fertigen Behälter oder Kunststoffflaschen zu einer weiteren Bearbeitung, bspw. zu einer Abfüllstation (nicht dargestellt) ausgegeben.

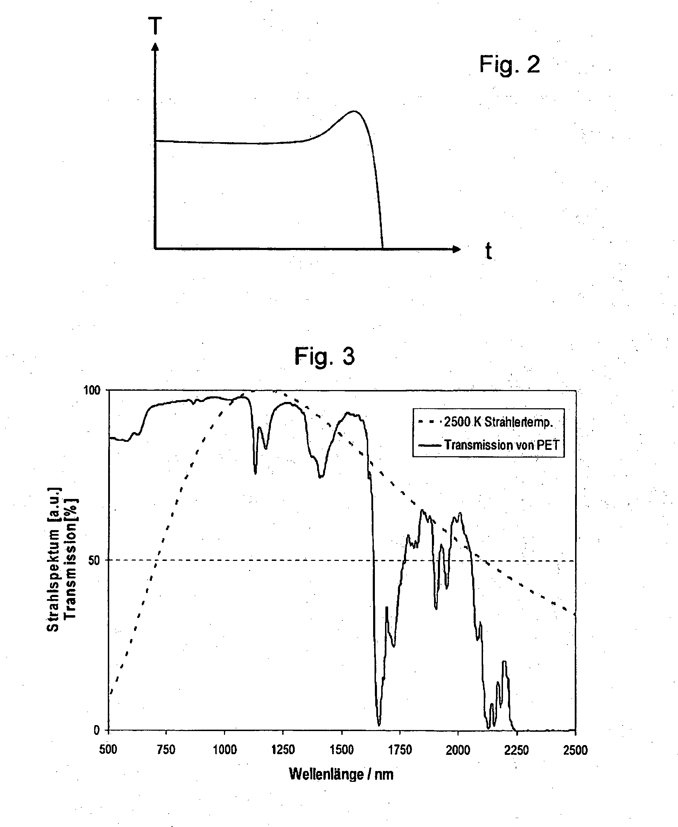

Das qualitative Diagramm der Fig. 2 verdeutlicht den typischen Zeitverlauf der auf die Vorformlinge einwirkenden Temperatur T während ihrer Durchlaufzeit t durch die Heizstrecke und damit des auf den Halsbereich der Vorformlinge einwirkenden Energieeintrags. Es ist erkennbar, dass die Temperatur anfänglich einen geringeren Wert aufweist, damit der für die optimale Temperierung notwendige Temperaturgradient erreicht werden kann, ohne dass hierbei das Mundstück des jeweiligen Vorformlings überhitzt wird. Mit Hilfe des dargestellten Temperaturverlaufs kann direkt unterhalb vom Tragring eine definierte Heizzone gebildet werden, die einen heißen Ring oder sog. Gürtel ausbildet, an dem ein sauberer Halsabzug definiert eingestellt und sichergestellt werden kann. Um die Wärmeleitung vom Preformkörper in den Mundstückbereich zu minimieren, muss die Aufheizung dieses Bereichs zunächst verzögert und schließlich am Ende des Aufheizprozesses über einen relativ kurzen Zeitraum mit leicht erhöhter Temperatur erfolgen. In der beschriebenen Weise kann der Vorformling wahlweise in einer ersten Phase seiner Erwärmung in seinem Halsbereich mit gegenüber den übrigen Bereichen geringerer Intensität erwärmt werden, so dass die Wärmeübertragung in den zu kühlenden Gewindebereich deutlich abgeschwächt ist. Wie anhand der Fig. 2 verdeutlicht wird, soll der Vorformling in einer zweiten Phase seiner Erwärmung in seinem Halsbereich mit gegenüber den übrigen Bereichen erhöhter Intensität erwärmt werden, damit der Halsabzug störungsfrei in der beschriebenen Weise erfolgen kann, ohne dass während des Streckblasumformvorgangs der Halsbereich des Vorformlings mit dem Stützring sowie dem sich daran anschließenden Gewindebereich in irgendeiner Weise beeinträchtigt, überdehnt und/oder anderweitig überlastet wird. Vorzugsweise ist die zweite Phase gegenüber der ersten Phase verkürzt. Zudem sollte sich an die zweite Phase der Erwärmung unmittelbar der Prozess der Blasumformung des Vorformlings zum Behälter anschließen. Dies kann dazu beitragen, die Prozesse in exakter Weise zu steuern und die Wärmeentwicklung im Material sowie die unerwünschte Wärmeleitung in das Mundstück des Vorformlings kontrolliert erfolgen können.

Das Diagramm der Fig. 3 zeigt einen typischen Verlauf eines über einer Wellenlänge von 500 nm bis 2500 nm aufgetragenen Transmissonsgrades von PET in Prozent (0 bis 100) sowie eines über dieselbe Abszisse (Wellenlänge in nm) aufgetragenen Strahlspektrums für eine Strahlertemperatur von 2500 K. Überlicherweise und standardmäßig verwendete IR-Lampen strahlen ein relativ breites Wellenlängenspektrum im infraroten Bereich ab. Durch Ändern der Strahlertemperatur kann die Lage des Strahlungs-Intensitäts-Maximums einer solchen Lampe verschoben werden.
Lampen, die relativ kalt betrieben werden, haben dieses Maximum eher im langwelligen Bereich (> 1500 nm), sehr heiß betriebene Lampen eher im kurzwelligen Bereich (< 1100 nm). In Versuchen lässt sich nachweisen, dass beide Betriebsarten der Lampen ihre Vorteile haben.

Eine relativ niedrige Strahlertemperatur mit einem langwelligen Strahlenspektrum lässt sich mit einem geringeren Energieeinsatz für die Lampen erzeugen, so dass die damit erzeugte Wärme kostengünstiger bereitgestellt werden kann. Allerdings zeigt diese Strahlung eine geringere Eindringtiefe, so dass sie oftmals nicht ausreichend von der Oberfläche des erwärmten Preforms in dessen tiefere Materialschichten dringen kann. Die dabei erreichte Eindringtiefe ist für dickwandige Preforms meist nicht ausreichend, da eine Durchwärmung des Materials nicht sichergestellt werden kann. Dünnwandigere Preforms dagegen kann man mit einer derartigen langwelligen Strahlung sehr effizient aufheizen. Ein weiterer Nachteil der langwelligen Strahlung sind die damit erzielbaren geringeren Leistungsdichten, da das Strahlungsmaximum niedriger ist.

Hohe Strahlertemperaturen dagegen haben den Vorteil, dass die Strahlung sehr tief in das zu erwärmende Kunststoffmaterial eindringt. Im Gegenzug entstehend dafür jedoch relativ hohe Energiekosten und eine verkürzte Lebensdauer für die verwendeten Lampen. Auch besteht die Gefahr, dass bei dünnwandigen Vorformlingen aufgrund der großen Eindringtiefe eine zu geringe Strahlungsabsorption im Material erfolgt, so dass in der Folge die Effizienz des Energieeintrags schlechter wird.

Um die genannten Vorteile zu kombinieren und die Nachteile weitestgehend auszuschließen, können im Verlauf der Heizstrecke und damit entlang der Wegstrecke des Preforms durch den Ofen zwei oder mehr unterschiedliche Lampentypen verbaut werden, wobei diese Lampentypen sich dadurch unterscheiden sollten, dass sie ihr Strahlungsmaximum an verschiedenen Stellen im Spektrum haben. Diese Lampen können dann je nach der Gestaltung und Wandstärke der zu beheizenden Vorformlingen zu unterschiedlichen Anteilen verwendet werden. Bei dünnwandigen Preforms können mehr die Lampen mit langwelligen Strahlungsspektren eingesetzt werden, während bei dickwandigen Preforms verstärkt die Lampen mit kurzwelligen Strahlungsspektren zum Einsatz kommen.

Da zur Herstellung kleinerer Flaschen oft relativ dünnwandige Preforms verwendet werden, wäre auch eine Variante denkbar, in der die "oberste(n)" Lampe(n) in einem Heizkasten (hängendes Heizen, also die Lampe, die das Material unterm Tragring heizt) über die ganze oder überwiegende Ofenlänge mit langwelligen Strahlern bestückt werden, da diese Preforms kürzer sind und somit nur diese Lampen für das Aufheizen der Preforms wirksam sind. Gerade der besonders dünne Bereich unterhalb des Tragrings, also vor dem Übergang in die zylindrische Wanddicke, ist hierfür prädestiniert. Die geringere Strahlungsintensität der langweiligen Strahler könnte z.B. durch beidseitiges Beheizen abgemildert werden, bei dem die Lampen gegenüber liegend angeordnet sein können.

Eine weitere Möglichkeit zur Variation der Strahlung ist der Einsatz von Lampen mit zwei oder mehr verschiedenen Reflektortypen, bspw. solchen mit unterschiedlichen Materialschichten. Dabei können die Schichten vom Reflektor eines ersten Typs folgendermaßen aufgebaut sein. Der Reflektionskörper ist aus wenigstens zwei Komponenten aufgebaut, wobei eine erste Komponente eine erste Oberfläche aufweist, die für die von der Energiequelle abgegebene Strahlung wenigstens teilweise transparent ist. Diese Oberfläche kann bspw. aus Glas, insbesondere aus Quarzglas bestehen und kann bevorzugt als mindestens eine Scheibe, Pressglas oder mehrere Glassegmente ausgebildet sein. Eine zweite Komponente kann dagegen eine Schicht aufweisen, deren Material aus einer Gruppe von Materialien ausgewählt ist, welche Aluminium, Chrom, Nickel, Kupfer, Gold und/oder mindestens eine Legierungen aus mindestens einem dieser Metalle enthält und zumindest abschnittsweise an der ersten Komponente anliegt. Die zweite Komponente kann zudem eine zweite, vorzugsweise strukturierte Oberfläche aufweisen. Zudem ist es sinnvoll, wenn wenigstens ein Abschnitt der zweiten Komponente für die Strahlung reflektierend und undurchlässig gegenüber langwelligen Strahlen ist. So kann als Reflektor zweiten Typs bspw. eine reflektierende Keramik eingesetzt werden.

Beide Reflektoren können prismen- oder parabelförmig profiliert sein und sowohl hinter der IR-Lampe liegen als auch auf der gegenüberliegenden Seite hinter dem Preform.

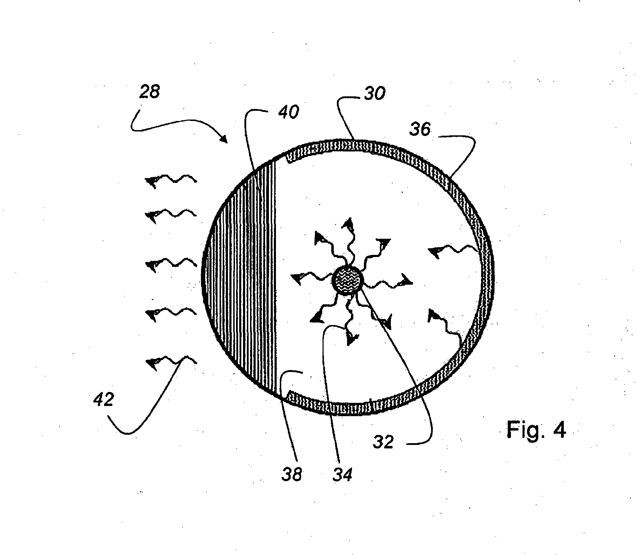

Die schematische Darstellung der Fig. 4 zeigt einen Linsenstrahler, der als Strahlungsquelle in der Heizstrecke zur Temperierung der Vorformlinge vor dem Blasformen angeordnet sein kann. Der Linsenstrahler 28 ist Teil der Heizeinrichtung 18 (vgl. Fig. 1), die im Verlauf der Heizstrecke 12 eine Mehrzahl derartiger Strahler zur Erzeugung einer infraroten Wärmestrahlung aufweist. Wahlweise können mehrere herkömmliche Röhrenstrahler (nicht dargestellt) sowie einige der in Fig. 4 dargestellten Linsenstrahler 28 kombiniert werden. Der in Fig. 4 im Querschnitt gezeigte Linsenstrahler 28 umfasst eine zylindrisch geformte Glasröhre 30 mit einer koaxial angeordneten Glühwendel 32, die infrarotes Licht 34 gleichmäßig radial in alle Richtungen abstrahlt. Ein größerer Teil einer Innenmantelfläche der Glasröhre 30 ist mit einer reflektierenden Beschichtung 36 versehen, die für eine Reflexion der Lichtanteile an eine Austrittsfläche 38 sorgt. Ein definierter Bereich der Glasröhre 30, der die Austrittsfläche 38 bilden soll, ist als Linse 40 ausgebildet, die für eine Bündelung des austretenden Lichts 42 und für dessen Parallelisierung sorgt, wie dies in Fig. 4 angedeutet ist. Im gezeigten Ausführungsbeispiel überdeckt die bspw. durch ein metallisches Coating o. dgl. gebildete reflektierende Beschichtung 36 im Querschnitt ein Winkelsegment von etwas mehr als 180 Grad, während die Austrittsfläche 38 mit der darin ausgebildeten Linse 40 ein Winkelsegment von etwas mehr als 90 Grad überdeckt.

Das von der Glühwendel 32 des Linsenstrahlers 28 erzeugte Licht 34 wird von der Beschichtung 36 vorzugsweise diffus reflektiert und an der Linse 40 so gebrochen, dass es außerhalb der Röhre 30 annähernd parallel verläuft. Der Heizbereich der betreffenden in entsprechender Weise ausgebildeten Strahler 28 kann somit durch Positionierung und Ausrichtung der Strahler 28 sehr exakt definiert werden, wodurch der Heizbereich bei Bedarf sehr schmal und sehr präzise auf den zu erwärmenden Abschnitt der Vorformlinge ausgerichtet werden kann. Der Heizbereich kann somit etwas schmaler als der Durchmesser der Glasröhre 30 gewählt werden.

Was im gezeigten Ausführungsbeispiel als Linse 40 der Austrittsfläche 38 dargestellt ist, kann bei der Fertigung der Glasröhre 30 insbesondere durch eine geeignete Verdickung im Glas realisiert werden. Eine in entsprechender Weise geschliffene Linse ist nicht notwendig. Mit der Formgebung der Glasröhre kann die Wirkrichtung der infraroten Strahlung gezielt auf die Stellen und Bereiche der Vorformlinge gerichtet und gelenkt werden, an denen sie für die gewünschte Temperierung im benötigten Umfang sorgen können. Anstelle der Verwendung von Leitblechen oder Reflektoren schlägt die Erfindung gemäß dem gezeigten Ausführungsbeispiel vor, optische Reflexions- und Brechungseinrichtungen durch eine in beschriebener Weise modifizierte Röhre 30 vorzusehen.

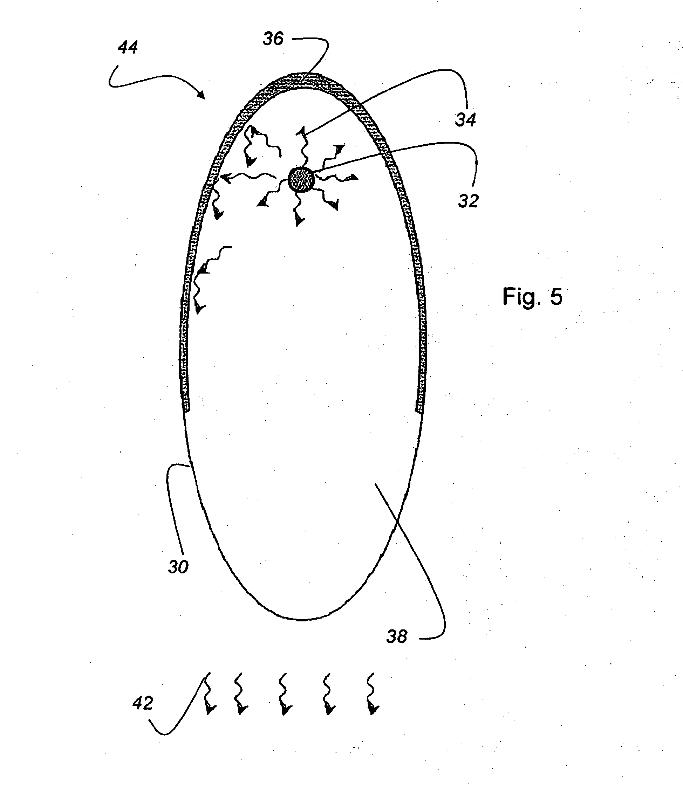

Die schematische Darstellung der Fig. 5 zeigt eine alternative Ausführungsform einer der Heizquellen der Heizeinrichtung 18 gemäß Fig. 1 in Gestalt eines Parabelstrahlers 44. Einer oder mehrere solcher Parabelstrahler 44 können wahlweise mit herkömmlichen Infrarotstrahlern und/oder mit Linsenstrahlern 28 gemäß Fig. 4 kombiniert werden, um als Strahlungsquellen in der Heizstrecke 12 zur Temperierung der Vorformlinge vor dem Blasformen zu dienen.

Der Parabelstrahler 44 gemäß Fig. 5 weist eine Glasröhre 30 mit ovalem oder ellipsenförmigem Querschnitt auf. In einem Brennpunkt der Ellipsenform ist die Glühwendel 32 angeordnet, die gleichmäßig in radialer Richtung infrarotes Licht 34 abstrahlt. Eine reflektierende Beschichtung 36 kann an der Innenmantelfläche der Glasröhre 30 derart angeordnet sein, dass der Bereich um die Glühwendel 32 sowie etwas mehr als die Hälfte des Querschnittes der Glasröhre durch die Beschichtung 36 abgedeckt ist. Das in Richtung der Beschichtung 36 abgestrahlte Licht 34 wird auf diese Weise parallel nach vorne in Richtung einer nicht beschichteten Austrittsfläche 38 abgestrahlt und tritt als weitgehend parallel gerichtetes Licht 42 aus der Glasröhre 30 des Parabelstrahlers 44 aus. Der nicht beschichtete Austrittsbereich 38 der Glasröhre 30 weist keine verdickte Wand auf und wirkt somit nicht als Linse, wie dies bei der in Fig. 4 gezeigten Variante der Fall ist. Eine solche Linsenwirkung ist bei der in Fig. 5 dargestellten Variante nicht notwendig, da die Ellipsenform des Röhrenquerschnitts in Verbindung mit der rückseitigen, im Bereich um die Glühwendel 32 angeordneten reflektierenden Beschichtung 36 für die gewünschte Parallelisierung des austretenden Infrarotlichts 42 sorgt.

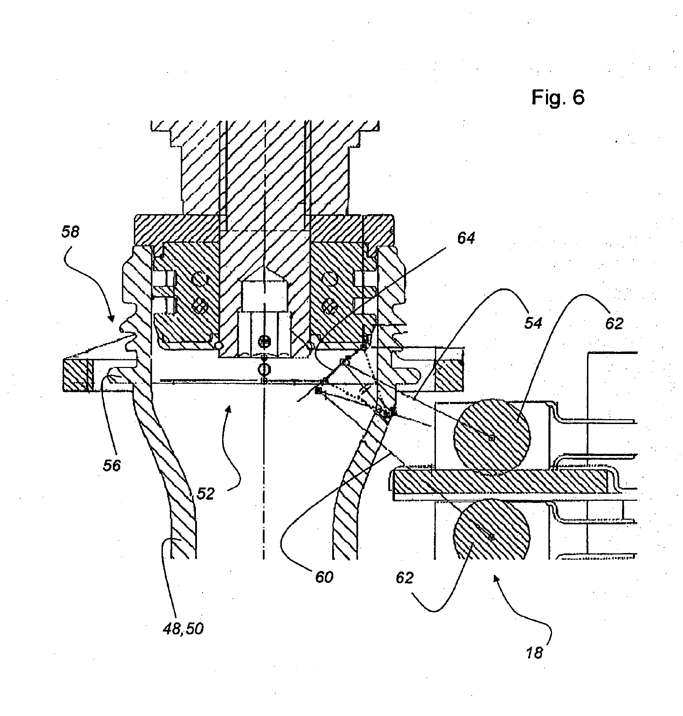

Die schematische Darstellung der Fig. 6 zeigt einen Längsschnitt einer im Halsbereich 48 eines Vorformlings 50 angeordneten Reflektoreinrichtung 52. Bei dieser Variante der Heizeinrichtung ist den zu temperierenden Vorformlingen 50 eine im Gewinde- und/oder Halsbereich 48 angeordnete Reflektoreinrichtung 52 zur Umlenkung von den Halsbereich 48 durchdringenden Strahlungsanteilen 54 und zur Erwärmung des Halsbereichs 48 an einer Innenseite des Vorformlings 50 zugeordnet. Mit dieser Reflektoreinrichtung 52 kann der Halsbereich 48 in gewünschter Weise gezielt temperiert werden. Zudem können Strahlungsanteile 54, welche den transparenten Halsbereich 48 durchdringen und auf den Tragring 56 oder den darüber angeordneten Gewindebereich 58 gerichtet sind, mittels der Reflektoreinrichtung 52 in eine gewünschte Richtung reflektiert und in vorteilhafter Weise zur Erwärmung der Innenwandung 60 des Halsbereichs 48 genutzt werden.

Sofern die Position der Strahlungsquellen 62 der Heizeinrichtung 18 gegenüber dem Halsbereich 48 des Vorformlings 50 immer konstant bleibt und sofern immer dieselben Vorformlinge 50 mit vorgegebener Wandstärke temperiert werden sollen, kann die Reflektoreinrichtung 52 in optimaler Weise justiert werden. Es kann jedoch auch von Vorteil sein, insbesondere hinsichtlich einer universellen Verwendbarkeit für unterschiedlich geformte und dimensionierte Vorformlinge 50, eine verstellbare Reflektoreinrichtung 52 vorzusehen. Bei einer möglichen Ausführungsform werden die Strahlungsquellen 62 mitsamt dem Vorformling 50 durch die Heizstrecke bewegt und bleiben relativ zu diesem fixiert, um jederzeit konstante Reflexionsbedingungen zu erhalten. Gemäß einer alternativen Ausführungsvariante sind die Strahlungsquellen 62 ortsfest in der Heizstrecke angeordnet und werden nicht mit dem Vorformling 50 durch die Heizstrecke bewegt.

Bei der alternativen Variante der verstellbaren Reflektoreinrichtung 52 kann eine Reflektorfläche 64 wahlweise hinsichtlich ihrer Position und/oder ihrer Oberflächenkontur verstellbar ausgebildet sein, so dass bspw. im Verlauf des Transports des Vorformlings 50 durch die Heizstrecke 12 eine Variation der Bestrahlung unterschiedlicher Abschnitte des Vorformlings 50 bzw. dessen Halsbereichs 48 ermöglicht ist. So können bspw. verstellbare Reflektorflächen 64 vorgesehen sein, die als verschiebbarer Reflektor bzw. als Mehrzahl verschiebbarer Reflektoren, als Reflektor mit einer Vielzahl von separat ansteuerbaren Mikroarrays, als flexibler Spiegel etc. ausgebildet sein können.

Abschließend wird darauf hingewiesen, dass die vorstehend beschriebene Erfindung als nicht auf die dargestellten Ausführungsbeispiele beschränkt anzusehen ist. Vielmehr ist eine Vielzahl von Varianten und Abwandlungen denkbar, die von dem erfindungsgemäßen Gedanken Gebrauch machen und deshalb ebenfalls in den Schutzbereich fallen.

### Bezugszeichenliste

- 10: Vorrichtung
- 12: Heizstrecke
- 14: Blasmaschine
- 16: Fördereinrichtung
- 18: Heizeinrichtung
- 20: Übergabeposition
- 22: Ausgabeposition
- 24: Eingabeposition
- 26: Ausgabeposition
- 28: Linsenstrahler
- 30: Glasröhre
- 32: Glühwendel
- 34: abgestrahltes Licht
- 36: reflektierende Beschichtung
- 38: Austrittsfläche
- 40: Linse
- 42: austretendes Licht
- 44: Parabelstrahler
- 46 48: Halsbereich
- 50: Vorformling
- 52: Reflektoreinrichtung
- 54: Strahlungsanteile
- 56: Tragring
- 58: Gewinde
- 60: Innenwandung
- 62: Strahlungsquelle
- 64: Reflektorfläche

## Patentansprüche

1. Verfahren zur Erwärmung eines Vorformlings (50) aus thermoplastischem Kunststoff vor dessen Blasumformung zu einem Behälter, wobei der Vorformling (50) während seiner Erwärmung an einem Gewindebereich (58) gehalten wird, wobei der Gewindebereich (58) über einem Tragring (56) und wobei ein Halsbereich (48) unterhalb des Tragrings (56) angeordnet ist, **dadurch gekennzeichnet, dass** der Vorformling (50) in einer ersten Phase seiner Erwärmung in seinem Halsbereich (48) mit gegenüber den übrigen Bereichen geringerer Intensität und in einer zweiten Phase seiner Erwärmung, an welche unmittelbar der Prozess der Blasumformung des Vorformlings anschließt, in seinem Halsbereich (48) mit gegenüber den übrigen Bereichen erhöhter Intensität erwärmt wird.

2. Verfahren nach Anspruch 1, bei dem der Vorformling (50) mit gegenüber anderen Bereichen über den Zeitabschnitt im Verlauf der Erwärmung verzögerter und/oder veränderlicher und/oder in ihrer Intensität und/oder der Lage des Strahlungs-Wellenlängenmaximums über den Zeitabschnitt im Verlauf der Erwärmung erhöhter Erwärmung erwärmt wird.

3. Verfahren nach einem der Ansprüche 1 bis 2, bei dem die Erwärmung mittels infraroter Bestrahlung, mittels Laserstrahlen, mittels Mikrowellenbestrahlung und/oder mittels wenigstens einer offenen Verbrennungsflamme erfolgt.

4. Verfahren nach einem der Ansprüche 1 bis 3, bei dem die infrarote und/oder mittels Laserstrahleinrichtungen erzeugte Bestrahlung temporär durch Variation der Wellenlänge ihres Strahlungsmaximums veränderlich ist.

5. Verfahren nach einem der Ansprüche 3 bis 4, bei dem die infrarote Bestrahlung in der zweiten Phase der Bestrahlung eine Wellenlänge mit einem Strahlungsmaximum größer als 1250 nm aufweist.

6. Verfahren nach einem der Ansprüche 1 bis 5, bei dem die Erwärmung und/oder Bestrahlung der Innenseite des Vorformlings (50) mit in seinem Halsbereich (48) angeordneten Reflektoreinrichtungen (52) beeinflusst, gerichtet und/oder verteilt wird. '

7. Verfahren nach Anspruch 6, bei dem die Reflektoreinrichtung (52) die zur Erwärmung eingesetzte Infrarot- und/oder Mikrowellenbestrahlung nach dem Durchdringen des für die Strahlung zumindest teiltransparenten Halsbereichs (48) des Vorformlings (50) die auf eine Reflektorfläche (64) auftreffende Strahlung durch Reflexion verteilt und/oder auf oberhalb und/oder unterhalb der durchdrungenen Bereiche umlenkt.

## Claims

1. A method for heating a preform (50) of a thermoplastic synthetic material prior to being blow-moulded to form a container, wherein the preform (50) is held at a screw thread section (58) while being heated, wherein the screw thread section (58) is arranged above a support ring (56) and wherein a neck section (48) is arranged below a support ring (56), **characterised in that** the preform (50) is heated with less intensity in its neck section (48) in comparison to the other sections during a first phase of being heated, and it is heated with more intensity in its neck section (48) in comparison to the other sections during a second phase of being heated, which phase is immediately succeeded by the process of blow-moulding the preform.

2. The method as recited in claim 1 wherein the preform (50) is heated using heat which, in comparison to other sections over the time interval in the course of being heated, is delayed and/or changeable and/or increased in regard to intensity and/or in regard to the position of the radiation wavelength maximum over the time interval in the course of being heated.

3. The method as recited in one of the claims 1 to 2 wherein the process of heating is carried out by means of infrared radiation, by means of laser beams, by means of microwave radiation and/or by means of at least one open combustion flame.

4. The method as recited in one of the claims 1 to 3 wherein the infrared radiation and/or the radiation generated by the laser beam devices is temporarily changeable by varying the wavelength of the radiation maximum.

5. The method as recited in one of the claims 3 to 4 wherein the infrared radiation has a wavelength with a radiation maximum greater than 1250 nm in the second phase of the radiation.

6. The method as recited in one of the claims 1 to 5 wherein the heat and/or radiation applied to the inside of the preform (50) is affected, adjusted, and/or distributed by reflector devices (52) arranged in the neck section (48) of the preform (50).

7. The method as recited in claim 6 wherein the infrared and/or microwave radiation used for heating penetrates the neck section (48) of the preform (50), which neck section (48) is at least partly transparent to the radiation, and impacts a reflector surface (64) of the reflector device (52), and the radiation is then distributed and/or deflected to above and/or below the penetrated sections by way of being reflected by the reflector device (52).

## Revendications

1. Procédé de chauffage d'une préforme (50) en matière plastique thermoplastique avant sa transformation par soufflage en un récipient, dans lequel, durant son chauffage, la préforme (50) est retenue sur une zone filetée (58), la zone filetée (58) étant disposée au-dessus d'une bague de manutention (56) et une zone de goulot (48) étant disposée au-dessous de ladite bague de manutention (56), **caractérisé par le fait que**, durant une première phase de son chauffage, ladite préforme (50) est chauffée dans sa zone de goulot (48) avec une intensité inférieure à celle des zones restantes et est, durant une deuxième phase de son chauffage qui est suivie immédiatement du processus de la transformation par soufflage de la préforme, chauffée dans sa zone de goulot (48) avec une intensité supérieure à celle des zones restantes.

2. Procédé selon la revendication 1, dans lequel la préforme (50) est chauffée avec un chauffage qui, par rapport à d'autres zones, est ralenti et/ou variable sur la période au cours du chauffage et/ou est plus important dans son intensité et/ou la position du maximum de longueur d'onde de rayonnement sur la période au cours du chauffage.

3. Procédé selon l'une quelconque des revendications 1 à 2, dans lequel le chauffage est réalisé au moyen d'une irradiation infrarouge, au moyen de faisceaux laser, au moyen d'une irradiation par microondes et/ou au moyen d'au moins une flamme nue de combustion.

4. Procédé selon l'une quelconque des revendications 1 à 3, dans lequel l'irradiation infrarouge et/ou produite au moyen de dispositifs au laser est variable temporairement par variation de la longueur d'onde de son maximum de rayonnement.

5. Procédé selon l'une quelconque des revendications 3 à 4, dans lequel l'irradiation infrarouge dans la deuxième phase de l'irradiation présente une longueur d'onde ayant un maximum de rayonnement supérieur à 1250 nm.

6. Procédé selon l'une quelconque des revendications 1 à 5, dans lequel le chauffage et/ou l'irradiation de la face intérieure de la préforme (50) est influencé(e), dirigé(e) et/ou réparti(e) par des dispositifs à réflecteur (52) disposés dans sa zone de goulot (48).

7. Procédé selon la revendication 6, dans lequel le rayonnement infrarouge et/ou par microondes qui est utilisé pour le chauffage pénètre la zone de goulot (48) de la préforme (50), laquelle zone de goulot (48) est au moins partiellement transparente au rayonnement, et rencontre une surface de réflecteur (64) du dispositif à réflecteur (52), et le rayonnement est ensuite réparti et/ou dévié par réflexion, par ledit dispositif à réflecteur (52), vers une zone située au-dessus et/ou au-dessous des zones pénétrées.
